# EUROPÄISCHE PATENTANMELDUNG

(11) **EP 1 103 591 A1**
(43) Veröffentlichungstag der Anmeldung: **30.05.2001**
(21) Anmeldenummer: 00203661.4
(22) Anmeldetag: 20.10.2000
(51) Int. Cl.: C09K 11/78, H01J 17/49

(54) **Plasmabildschirm mit rotem Leuchtstoff**

(30) Priorität: 29.10.1999 DE 19952242
(71) Anmelder: Philips Corporate Intellectual Property GmbH, 52064 Aachen (DE); Koninklijke Philips Electronics N.V., 5621 BA Eindhoven (NL)
(72) Erfinder: Jüstel, Thomas, Dr., Philips Corp.Int.Prop.GmbH, 52064 Aachen (DE); Nikol, Hans, Dr., Philips Corp.Int.Prop.GmbH, 52064 Aachen (DE); Bechtel, Helmut, Dr., Philips Corp.Int.Prop.GmbH, 52064 Aachen (DE); Ronda, Cornelis R.,Dr., Philips Corp.Int.Prop.GmbH, 52064 Aachen (DE)
(74) Vertreter: Volmer, Georg, Dipl.-Ing.

(57) **Zusammenfassung**

Ein Plasmabildschirm mit einer Trägerplatte (2), einer transparenten Frontplatte (1), einer Rippenstruktur (13), die den Raum zwischen Trägerplatte (2) und Frontplatte (1) in Plasmazellen, die mit einem Gas gefüllt sind, aufteilt, mit einer oder mehreren Elektroden-Arrays (6,7) zur Erzeugung von stillen elektrischen Entladungen in den Plasmazellen und mit einer Leuchtstoffschicht (10), die einen Leuchtstoff zur Erzeugung von roter Farbstrahlung, ausgewählt aus der Gruppe der Seltenerdmetallborate mit der allgemeinen Formel EA M¹_{l-x-y}M²ₓEu_{y}B₉O₁₆ mit EA = Ca, Sr, Ba; M¹ = Gd, La,M² = Y, Lu, Sc, In und 0 < x ≤ 0.5, 0.01 ≤ y ≤ 0.4, und M³ₗ₋ᵣ₋ₛYᵣEuₛBO₃ mit M³ = Sc,, In, Lu und 0.01 ≤ r ≤ 0.99, 0.01 ≤ s ≤ 0.15, enthält, zeichnet sich durch Rotpunkt, der in Richtung höherer Farbsättigung verschoben ist, aus. Außerdem ist der Farbkontrast bei heller Umgebungsbeleuchtung erhöht.

Die Erfindung betrifft auch einen Leuchtstoff zur Erzeugung von roter Farbstrahlung, ausgewählt aus der Gruppe der Seltenerdmetallborate mit der allgemeinen Formel EA M¹_{l-x-y} M²ₓEu_{y}B₉O₁₆ mit EA = Ca, Sr, Ba; M¹ = Gd, La,M² = Y, Lu, Sc, In und 0 < x ≤ 0.5, 0.01 ≤ y ≤ 0.4, und M³ₗ₋ᵣ₋ₛYᵣEuₛBO₃ mit M³ = Sc,, In, Lu und 0.01 ≤ r ≤ 0.99, 0.01 ≤ s ≤ 0.15.

## Beschreibung

Die Erfindung betrifft einen Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht.

Das Grundprinzip eines Plasmabildschirms besteht darin, dass gekreuzte Elektrodenstreifen eine Matrix bilden und eine dazwischen stattfindende Gasentladung Bildpunkte aufleuchten läßt. Die monochromen Versionen der Anfangszeit der Plasmabildschirme nutzten das erzeugte Licht direkt. Mit ihrer durch die Neongasfüllung verursachte, orangeroten Farbe haben sie aber keine Popularität errungen und nur einen eng begrenzten Markt gefunden - dort wo ihre Immunität gegen hohe magnetische Störfelder, mechanische Vibrationen und extreme Temperaturen gefragt ist, etwa im militärischen Bereich, im medizinischen Bereich z. B. in der NMR- Diagnostik und im industriellen Bereich z. B. in Aluminiumelektrolysen und in Umspannwerken.

Sehr viel mehr Erfolg als die alten monochromen Plasmabildschirme haben jetzt die Farbversionen. Hier besteht die Gasfüllung aus einem Edelgas, z. B. Xenon oder einem Edelgasgemisch z. B. ein Gemisch aus Helium, Neon und Xenon. Bei der Entladung entsteht Ultraviolett - Strahlung im VUV-Bereich, d.h. mit einer Wellenlänge kleiner 200 nm. diese UV-Strahlung regt die Leuchtstoffe in der in Streifen angeordneten Leuchtstoffschicht zur Abstrahlung von sichtbarem Licht in Rot, Grün und Blau an. Die lumineszierenden Materialien in Plasmadisplays nutzen also anders als konventionelle Leuchtstofflampen die hochenergetische Seite des UV-Spektrums. Je nach der Zusammensetzung des Edelgasgemisches und des Gasdruckes kann die VUV-Emission zwischen einer Einzellinie bei 147 nm oder einer breiten Bande in der Gegend von 172 nm variieren. Daraus resultieren neue Anforderungen an die RGB-Leuchtstoffe in einem Plasmadisplay.

Die RGB-Leuchtstoffe sind das Endglied der Energietransferkette, in der in dem Plasmabildschirm elektrische Energie in sichtbares Licht umgewandelt wird. Die Effizienz eines Plasmabildschirms mit einer Leuchtstoffschicht hängt entscheidend davon ab, wie vollständig das erzeugte UV-Licht im Leuchtstoff absorbiert wird und wie vollständig anschließend das erzeugte sichtbare Licht den Plasmabildschirm in Richtung des Betrachters verläßt.

Es wurde gefunden, dass der elektro-optische Wirkungsgrad konventioneller roter Leuchtstoffe, z. B. Y₂O₃:Eu oder Y₂O₂S:Eu, in einem Plasmabildschirm unbefriedigend ist, da diese die Strahlung mit einer Wellenlänge unter 200 nm nur wenig absorbieren.

Aus US 4,085,350 ist ein lichtemittierendes Bauteil mit einem durch Europium aktivierten Yttrium-Gadolinium-Borat der allgemeinen Formel {[(Y₁₋ₓGdₓ)_{1-z}B_{z}]_{1-y}Eu_{y}}₂O₃ mit 0 ≤ x ≤1, 0.001 ≤ y ≤ 0.1, 0.25 ≤ z ≤0.75 als Leuchtstoff, der durch die VUV-Strahlung einer Gasentladung angeregt wird, bekannt. Dieser Leuchtstoff hat eine verbesserte Quantenausbeute für die VUV-Strahlung mit einer Wellenlänge λ zwischen 10 und 200 nm.

Es ist jedoch ein Schwachpunkt dieser Leuchtstoffe zur Erzeugung der roten Farbstrahlung, dass ihr Farbpunkt nicht innerhalb der EBU-Zone für rote Leuchtstoffe liegt, sondern zum orangen Bereich verschoben ist.

Es ist daher die Aufgabe der vorliegenden Erfindung einen Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht zur Verfügung zu stellen, der sich durch eine verbesserte, naturgetreue Farbwiedergabe und größere Helligkeit auszeichnet.

Erfindungsgemäß wird die Aufgabe gelöst durch einen Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht, die einen Leuchtstoff, ausgewählt aus der Gruppe der Seltenerdmetallborate mit der allgemeinen Formel EA M¹_{1-x-y}M²ₓEu_{y}B₉O₁₆ mit EA = Ca, Sr, Ba; M¹ = Gd, Laₛ,M² = Y, Lu, Sc, In und 0 < x ≤ 0.5, 0.01 ≤ y ≤ 0.4, und M³₁₋ᵣ₋ₛYᵣEuₛBO₃ mit M³ = Sc,, In, Lu und 0.01 ≤ r ≤ 0.99, 0.01 ≤ s ≤ 0.15, enthält.

Bei einem derartigen Plasmabildschirm ist der Rotpunkt zu höherer Farbsättigung verschoben. Dies beeinflusst nicht nur die Rottöne, sondern auch alle Zwischentöne auf den Linien Rot-grün und Blau-Rot, die durch die Vergrößerung des Darstellungsdreiecks im roten Bereich erreichbar werden. Außer den Rot- und Gelbtönen ist hauptsächlich der Magentabereich betroffen. Dadurch können viele Farbtöne naturgetreuer dargestellt werden, ein Unterschied, der sichtbar ist. Außerdem ist der Farbkontrast bei heller Umgebungsbeleuchtung erhöht.

Im Rahmen der vorliegenden Erfindung ist es bevorzugt, dass der Leuchtstoff das Seltenerdmetallborat BaGd_{0.8}Eu_{0.2}B₉O₁₆ ist.

Es kann auch bevorzugt sein, daß der Leuchtstoff das Seltenerdmetallborat Lu_{0.5}Y_{0.425}Eu_{0.075}BO₃ ist.

Die Erfindung betrifft auch einen Leuchtstoff, ausgewählt aus der Gruppe der Seltenerdmetallborate mit der allgemeinen Formel EA M¹_{1-x-y}M²ₓEu_{y}B₉O₁₆ mit EA = Ca, Sr, Ba; M¹ = Gd, LaₛM² = Y, Lu, Sc, In und 0 < x ≤ 0.5, 0.01 ≤ y ≤ 0.4, und M³₁₋ᵣ₋ₛYᵣEuₛBO₃ mit M³ = Sc,, In, Lu und 0.01 ≤ r ≤ 0.99, 0.01 ≤ s ≤ 0.15.

Nachfolgend wird die Erfindung anhand von einer Figur und zwei Ausführungsbeispielen weiter erläutert.

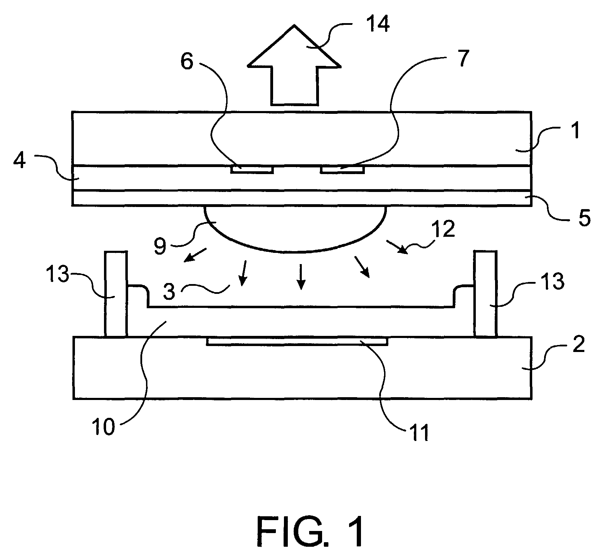

Fig. 1 zeigt schematisch einen Querschnitt durch einen Plasmabildschirm.

Die Lichtanregung durch die UV-Strahlung einer Gasentladung ist das zugrundeliegende Prinzip aller Typen von Plasmadisplays. Plasmadisplays können in d.c.- adressierte Bildschirme und in a.c.- adressierte Bildschirme eingeteilt werden. Unterscheiden tun sie sich in der Art der Strombegrenzung.

Fig. 1 zeigt beispielhaft eine Plasmazelle eines AC- Plasmadisplays. Ein solcher AC-Plasmabildschirm setzt sich aus einer transparenten Frontplatte 1 und einer Tragerplatte 2 zusammen, die auf Abstand voneinander gehalten werden und peripher hermetisch verschlossen sind. Der Raum zwischen beiden Platten bildet den Entladungsraum 3, der durch die Schutzschicht und die Leuchtstoffschicht begrenzt wird. Üblicherweise bestehen sowohl Frontplatte als auch Trägerplatte aus Glas. Individuell ansteuerbare Plasmazellen werden durch eine Rippenstruktur 13 mit Trennrippen gebildet. Eine Vielzahl von transparenten Bildelektroden 6, 7 sind streifenförmig auf der Frontplatte angeordnet. Die zugehörigen Steuerelektroden 11 sind auf der Trägerplatte senkrecht dazu angebracht, so dass an den Kreuzungspunkten jeweils ein Entladung gezündet werden kann.
Der Entladungsraum ist mit einem passenden Entladungsgas gefüllt, z. B. mit Xenon, einem xenonhaltigen Gas, Neon oder einem neonhaltigem Gas. Die Gasentladung wird zwischen den Bildelektroden 6, 7 auf der Frontplatte gezündet. Um einen direkten Kontakt zwischen dem Plasma und den Bildelektroden 6, 7 zu vermeiden, sind diese mit einer dielektrischen Schicht 4 und einer Schutzschicht 5 bedeckt. In der Entladungszone ist das Gas ionisiert und es entsteht ein Plasma 9, das UV-Strahlung 12 emittiert.
Je nach Zusammensetzung des Gases in der Plasmazelle ändert sich die spektrale Intensität der Gasentladung. Gasgemische, die weniger als 30 Vol.-% Xenon enthalten, emittieren hauptsächlich Resonanzstrahlung bei 147 nm, Gasgemische mit mehr als 30 Vol.-% Xenon emittieren die Excimerstrahlung bei 172 nm.

Die ausgesendete UV-Strahlung regt bildpunktweise strukturierte rote grüne und blaue Leuchtstoffe zur Emission von Licht im sichtbaren Bereich 14 an, wodurch ein Farbeindruck entsteht. Die Bildpunkte des Plasmabildschirms in den drei Grundfarben Rot, Blau und Grün werden durch eine Leuchtstoffschicht 10 auf mindestens einem Teil der Trägerplatte und/oder auf den Wänden der Trennrippen in den Plasmazellen realisiert. Die Plasmazellen sind aufeinanderfolgend je mit einem roten, grünen oder blauen Leuchtstoff beschichtet. Drei nebeneinander liegenden Plasmazellen repräsentieren ein Pixel, mit dem die Darstellung aller Farben durch Mischen der drei Grundfarben möglich ist.

Die Leuchtstoffe zur Erzeugung der roten Farbstrahlung mit der allgemeinen Formel M³₁₋ᵣ₋ₛYᵣEuₛBO₃ mit M³ = Sc, In, Lu und 0.01 ≤ r ≤ 0.99, 0.01 ≤ s ≤ 0.1 bestehen ebenso wie der konventionelle Leuchtstoff (Y,Gd)BO₃:Eu aus einem Wirtsgitter mit Vaterite-Struktur, das mit dem Aktivatorion Eu³⁺ in kleiner Konzentration dotiert ist. Die Vaterite-Struktur besitzt zwei kristallographisch voneinander unabhängige Gitterplätze, die von den dreiwertigen Kationen besetzt werden. Ein Gitterplatz hat ein Inversionszentrum, der andere nicht. Das Eu³⁺-Ion besetzt beide Gitterplätze

Das Aktivatorion Eu³⁺ besitzt Energieniveaus, die durch direkte Anregung oder indirekt durch Energietransfer besetzt werden können, und die für die Lumineszenz verantwortlich sind. Die Energieniveaus, die an dem Emissionsprozeß beteiligt sind, zeigen nur eine geringe Wechselwirkung mit dem Wirtsgitter. Die optischen Übergänge finden nur zwischen den 4f-Niveaus statt, die von ihrem Koordinationspartner und ihrer chemischen Umgebung durch die äußeren Elektronen sehr gut abgeschirmt sind. Dadurch zeigen sie ein typisches Linienspektrum. Daß ihr Luminenzprozeß in erster Näherung unabhängig von ihrer chemischen Umgebung ist, macht die europiumhaltigen Leuchtstoffe einmalig. Die mit Eu³⁺ aktivierten Leuchtstoffe absorbieren UV-Photonen mittels eines Charge-Transfer-Zustandes. In einem zweiten Schritt wird die Energie an die f-Niveaus abgegeben, die deaktiviert werden und dabei die typischen ff-f-Emissionslinienspektren zeigen.

Das Aktivatorion Eu³⁺ hat in Verbindungen mit Vaterite-Struktur ein Emissionsspektrum mit drei Emissionslinien bei 595 nm (⁵Dₒ-⁷F₁), 612 nm (⁵Dₒ-⁷F₂) und 628 nm (⁵Dₒ-⁷F₂). Überraschenderweise wurde gefunden, dass in den Leuchtstoffen mit der allgemeinen Formel M³₁₋ᵣ₋ₛYᵣEUₛBO₃ mit M³ = Sc, In, Lu und 0.01 ≤ r ≤ 0.99, 0.01 ≤ s ≤ 0.1, in denen im Vergleich zu (Y,Gd)BO₃:Eu ein Teil des Gadoliniums durch Sc, In und Lu ersetzt ist, die Intensität der orangefarbigen Linie bei 595 nm in Relation zu den roten Linien bei 612 nm und 628 nm deutlich verringert ist, ohne dass die Quanteneffektivität vermindert wurde.

Ebenso überraschend wurde gefunden, dass in Leuchtstoffen mit der allgemeinen Formel EA M¹_{1-x-y}M²ₓEu_{y}B₉O₁₆ mit EA = Ca, Sr, Ba M¹ = Gd, Laₛ M² = Y, Lu, Sc, In und 0 ≤ x ≤ 0.5, 0.01 ≤ y ≤ 0.4, in denen das Aktivatorion Eu³⁺ ausschließlich auf Gitterplätzen mit C₂ᵥ-Symmetrie sitzt, sowohl die Linie bei 595 nm als auch die Linie bei 628 nm in ihrer Intensität vermindert sind. Die rote Linie bei 615 nm ist dafür sehr intensiv und zeigt ein hohes Lumenäquivalent von etwa 270 lm/W.

Die Seltenerdmetallborate werden nach konventionellen Methoden hergestellt, z. B. durch eine Festkörperreaktion. Dabei werden die Oxide oder Carbonate als Ausgangsverbindung verwendet. Diese werden gemischt, gemahlen und anschließend gesintert. Man erhält Leuchtstoffe mit einer einheitlichen Kristallstruktur als feinkörnige Partikel mit einer Korngröße von 1 bis 10 µm.

Als Herstellungsverfahren für die Leuchtstoffschicht kommen sowohl Trockenbeschichtungsverfahren, z. B. elektrostatische Abscheidung oder elektrostatisch unterstütztes Bestäuben, als auch Nassbeschichtungsverfahren, z. B. Siebdruck, Dispenserverfahren, bei denen eine Suspension mit einer sich dem Kanälen entlang bewegenden Düse eingebracht wird, oder Sedimentation aus der flüssigen Phase, in Betracht.

Für die Nassbeschichtungsverfahren müssen die Leuchtstoffe in Wasser, einem organischen Lösemittel, gegebenenfalls zusammen mit einem Dispergiermittel, einem Tensid und einem Antischaummittel oder einer Bindemittelzubereitung dispergiert werden. Geeignet für Bindemittelzubereitungen für Plasmabildschirme sind organische und anorganischen Bindemittel, die eine Betriebstemperatur von 250°C ohne Zersetzung, Versprödung oder Verfärbung überstehen.

Obwohl die Erfindung anhand eines AC-Farbplasmabildschirms beschrieben wurde, ist ihre Verwendung nicht auf diesen Typ des Plasmabildschirms beschränkt, sondern kann beispielsweise auch für DC-Farbplasmabildschirme und für monochromatischen AC- und DC-Plasmabildschirme verwendet werden.

### Ausführungsbeispiel 1

Zur Herstellung von Ba Gd_{0.8}Eu_{0.2}B₉O₁₆ werden 20.0 g (101.4 mmol) BaCO₃, 14.7 g (40.5 mmol) Gd₂O₃, 3.6 g (10.1 mmol) Eu₂O₃ und 57.1 g (92.3 mmol) H₃BO₃ in einem Achatmörser gründlich verrieben. Nach einem ersten Tempern bei 700°C wird das Pulver erneut verreiben und zweimal bei 950°C gesintert. Nach dem ersten Sintern wird das Pulver erneut verrieben. Anschließend wird der Leuchtstoff mit verdünnter Natronlauge gewaschen, abfiltriert und bei 80°C getrocknet. Man erhält eine weißes Pulver, das durch ein Sieb mit einer Siebweite von 30 µm gesiebt wird.
Mit dem so hergestellten Leuchtstoff wurde ein Plasmabildschirm nach den bekannten Verfahren hergestellt und getestet. Es wurden die Meßwerte entsprechend Tabelle 1 erhalten.

**Tabelle 1**

| Farbort x,y | λₘₐₓ [nm] | LE [lm/W] | QE₂₅₄[%] | RQ₆₁₅[%] |
|---|---|---|---|---|
| 0.644, 0.341 | 615 | 270 | 65 | 99 |

### Ausführungsbeispiel 2

Zur Herstellung von Lu_{0.5}Y_{0.425}Eu_{0.075}BO₃ werden 28.6 g (71.8 mmol) Lu₂O₃, 13,78 g (61.0 mmol) Y₂O₃, 37.9 g (10.8 mmol) Eu₂O₃ und 21.3 (344,6 mmol) H₃BO₃ Zur Herstellung von Ba Gd_{0.8}Eu_{0.2}B₉O₁₆ werden 20.0 g (101.4 mmol) BaCO₃, 14.7 g (40.5 mmol) Gd₂O₃, 3.6 g (10.1 mmol) Eu₂O₃ und 57.1 g (92.3 mmol) H₃BO₃ in einem Achatmörser gründlich verrieben. Nach einem ersten Tempern bei 600°C in einem Korundschiffchen wird das Pulver erneut verreiben und zweimal bei 1250°C gesintert. Nach dem ersten Sintern wird das Pulver erneut verrieben. Anschließend wird der Leuchtstoff mit verdünnter Salzsäure gewaschen, abfiltriert und bei 80°C getrocknet. Man erhält eine weißes Pulver, das durch ein Sieb mit einer Siebweite von 30 µm gesiebt wird.
Mit dem so hergestellten Leuchtstoff wurde ein Plasmabildschirm nach den bekannten Verfahren hergestellt und getestet. Es wurden die Meßwerte entsprechend Tabelle 2 erhalten.

**Tabelle 2**

| Farbort x,y | λₘₐₓ [nm] | LE [lm/W] | QE₂₅₄[%] | RQ₆₁₅[%] |
|---|---|---|---|---|
| 0.640, 0.350 | 595 | 265 | 55 | 99 |

## Patentansprüche

1. Plasmabildschirm mit einer Trägerplatte, einer transparenten Frontplatte, einer Rippenstruktur, die den Raum zwischen Trägerplatte und Frontplatte in Plasmazellen, die mit einem Gas gefüllt sind, aufteilt, mit einer oder mehreren Elektroden-Arrays zur Erzeugung von stillen elektrischen Entladungen in den Plasmazellen und mit einer Leuchtstoffschicht, die einen Leuchtstoff, ausgewählt aus der Gruppe der Seltenerdmetallborate mit der allgemeinen Formel EA M¹_{1-x-y}M²ₓEu_{y}B₉O₁₆ mit EA = Ca, Sr, Ba; M¹ = Gd, LaₛM² = Y, Lu, Sc, In und 0 < x ≤ 0.5, 0.01 ≤ y ≤ 0.4, und M³₁₋ᵣ₋ₛYᵣEuₛBO₃ mit M³ = Sc,, In, Lu und 0.01 ≤ r $le$$ ≤ ≤ 0.99, 0.01 ≤ s ≤ 0.15,enthält.

2. Plasmabildschirm gemäß Anspruch 1,
dadurch gekennzeichnet,
dass der Leuchtstoff das Seltenerdmetallborat BaGd_{0.8}Eu_{0.2}B₉O₁₆ ist.

3. Plasmabildschirm gemäß Anspruch 1,
dadurch gekennzeichnet,
dass der Leuchtstoff das Seltenerdmetallborat Lu_{0.5}Y_{0.425}Eu_{0.075}BO₃ ist.

4. Leuchtstoff, ausgewählt aus der Gruppe der Seltenerdmetallborate mit der allgemeinen Formel EA M¹_{1-x-y}M²ₓEu_{y}B₉O₁₆ mit EA = Ca, Sr, Ba; M¹ = Gd, LaₛM² = Y, Lu, Sc, In und 0 < x ≤ 0.5, 0.01 ≤ y ≤ 0.4, und M³₁₋ᵣ₋ₛYᵣEuₛBO₃ mit M³ = Sc,, In, Lu und 0.01 ≤ r ≤ 0.99, 0.01 ≤ s ≤ 0.15.
